# EUROPEAN PATENT APPLICATION

(11) **EP 0 559 115 A1**
(43) Date of publication of application: **08.09.1993**
(21) Application number: 93103195.9
(22) Date of filing: 01.03.1993
(51) Int. Cl.: E05B 49/00

(54) **Data medium**

(30) Priority: 29.02.1992 JP 79335/92; 18.06.1992 JP 186165/92; 01.07.1992 JP 199125/92
(71) Applicant: AOKI URBAN DEVELOPMENT CORPORATION, Osaka 531 (JP); KORANSHA CO., LTD., Saga 844 (JP); TOPPAN PRINTING CO. LTD., Tokyo 110 (JP)
(72) Inventor: Iwaki, Toru, c/o Aoki Urban Development Corp., Osaka 531 (JP); Morooka, Takashige, c/o Koransha Co. Ltd., Nishimatsuura-gun, Saga 844 (JP); Saito, Toshiharu, c/o Toppan Printing Co., Ltd., Tokyo 110 (JP)
(74) Representative: Fiener, Josef

(57) **Abstract**

A ceramic key body (2) and an IC module (3) are provided. The key body has a head portion (2a) and an insert portion (2b) to insert into an electronic lock. The insert portion has a pit (4) formed therein, and the IC module is fitted into the pit. The IC module houses a semiconductor integrated circuit (6) constituting at least a microprocessor and a memory. Contacts (9) are formed on the surface of the IC module. The contacts are exposed to the outside of the insert portion. The key body 2 has a thickness of not less than 2.0 mm and not more than 5.0 mm. Memory data storage capacity is large, stored data can be reliably protected against external force, security quality is high, impact resistance is excellent, portability is excellent, and production is easy. The key body may be made of metal and coated with a ceramic layer.

## Description

### FIELD OF THE INVENTION

The present invention relates to a data medium suitable for electronic keys for storing particular information for electronic lock operation and also suitable for IC (Integrated Circuit) cards for storing various pieces of information.

### DESCRIPTION OF THE PRIOR ART

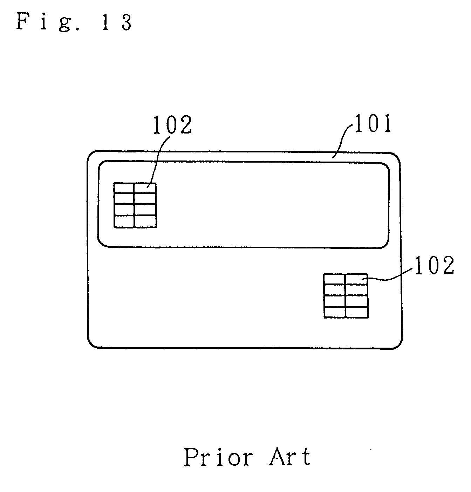

Traditionally, a magnetic card key comprising a plastic card and a magnetic memory portion formed therein, and an IC card key comprising a plastic card 101 and an IC module 102 attached thereto as illustrated in Figure 13 (see Japanese Patent Examined Publication No. 41073/1990), have been used as electronic keys. However, the magnetic card key is subject to limitation as to data storage capacity, and the stored data is easily deciphered because the stored data can be read out directly from the magnetic memory portion. Also, since the plastic IC card key undergoes bending, torsion and other forms of deformation caused by external force, the IC module 102 is easy to break. In any case, long-term use results in deteriorated appearance due to flaws etc.

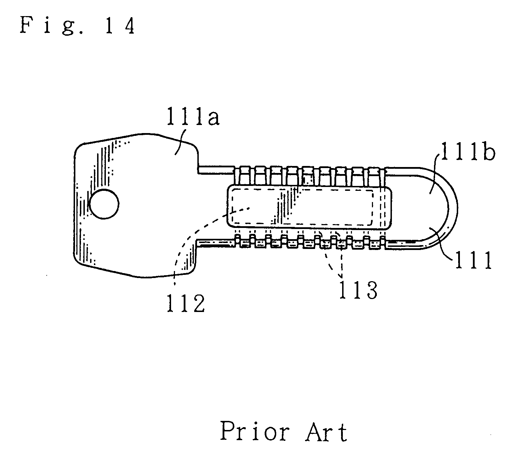

Also, as illustrated in Figure 14, there has been proposed an electronic key comprising a thick, large, non-electroconductive key body 111, which has a head portion 111a to handle and an insert portion 111b to insert into an electronic lock, and an IC module 112 housed therein, wherein contacts (leads) 113 of the IC module 112 are exposed on the surface of the key body 111 (see Japanese Patent Examined Publication No. 50633/1987). However, the thickness of the key body 111 must be increased to obtain sufficient strength, since the key body 111 is made of a plastic material which is not mechanically strong. Such a great thickness of the key body 111 results in poor portability. Also, since the IC module 112 is housed in the key body 111, a complex process is necessary to expose the contacts 113 to the surface of the key body 111.

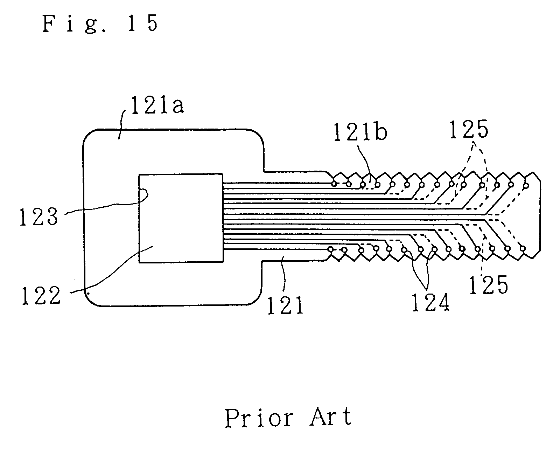

As illustrated in Figure 15, there has been proposed another electronic key comprising a ceramic key body 121, which has a head portion 121a and an insert portion 121b to insert into an electronic lock, and an IC module 122 (see Japanese Patent Unexamined Publications Nos. 25682/1987 and 220678/1987). The IC module 122 is fitted into a pit 123 made in the head portion 121a, contacts 124 for electrical connection are made in the insert portion 121b, and the IC module 122 and the contacts 124 are connected via leads 125. However, it is difficult to form leads 125 between the IC module 122 and the contacts 124 in the hard ceramic key body 121. In addition, the connection between the IC module 122 and the contacts 124 via the leads 125 in the key body 121 can cause internal defects of the ceramic material, so that the strength of the key body 121 decreases. Moreover, an external stress such as bending stress or torsion stress is exerted on the interface between the head portion 121a and the insert portion 121b when using the key, so that the presence of such internal defects in the interface makes the key fragile.

There has also been proposed an identifying card comprising a thin support of a ceramic material such as zirconia or aluminum nitride and an IC chip housed therein (see Japanese Patent Examined Publication No. 12240/1992). This identifying card offers improved portability, since the support is thin (0.76 mm according to the ISO (International Organization for Standardization) Standards). Also, since the thin support is made of a ceramic material, malfunction and memory data destruction in the IC chip by static electricity are prevented. However, when the thickness of the support is 0.76 mm as specified by the ISO Standards, the identifying card is broken due to impact in case where it is fallen onto concrete floor etc. by accident. Also, when the support is made of metal to obtain sufficient strength, static electricity from the human body transmits to the IC circuit via the support, whereby malfunction and memory data destruction in the IC circuit occur, or malfunction in the electrical circuit of the data reader writer occurs as a result of entry of abnormal electric current into the electrical circuit thereof. When the electronic key is formed in a card shape, there is a possibility that the portion housing no IC chip is mistakenly inserted into the electronic lock; to prevent this error, a pair of IC chips may be provided, but it results in increased cost.

The object of the present invention is to provide a data medium offering a solution to the above problems in the prior art.

### SUMMARY OF THE INVENTION

According to the first aspect of the present invention, there is provided a data medium used as an electronic key comprising a ceramic key body having a head portion to handle and an insert portion to insert into an electronic lock, and an IC module housing a semiconductor integrated circuit which constitutes at least a microprocessor and a memory, wherein a pit is formed in the insert portion, contacts for electrical connection are formed on the surface of the IC module, and the IC module is fitted into the pit so that the contacts are exposed to the outside of the insert portion. Preferably, the thickness of the key body is not less than 2.0 mm and not more than 5.0 mm. Preferably, the head portion is of a size not permitting insertion into the electronic lock. Preferably, the ceramic material constituting the key body is based on zirconium oxide and supplemented with yttrium oxide as a stabilizer.

In the data medium according with the first aspect of the present invention used as an electronic key, the key body undergoes relatively minor deformation caused by external stress because it is made of a strong and rigid ceramic material. It is therefore possible to prevent the IC module fitted into the pit of the key body, from being deformed by external stress. Also, since the semiconductor integrated circuit, which constitutes at least a microprocessor and a memory, and the contacts are integrated into the IC module, it is unnecessary to separately provide leads on the outside of the IC module to contact the semiconductor integrated circuit and the contacts. In other words, the present data medium functions as a key merely by fitting the IC module into the pit of the key body. Since it is unnecessary to provide leads causing an internal defects inside the ceramic key body, and since the pit is formed in the insert portion where the action of external stress is minor, the mechanical strength of the key improves markedly so that its breakage resistance increases. Additionally, key breakage due to impact can be effectively prevented by setting the thickness of the key body at not less than 2.0 mm, and portability degradation can be prevented by setting the thickness of the key body at not more than 5.0 mm. By using zirconium oxide as the principal component of the ceramic material constituting the key body and adding yttrium oxide as a stabilizer, strength and fracture toughness can be enhanced. Thereby it is possible to provide an excellently portable and easy-to-produce electronic key having a large data storage capacity, offering high security for stored data and reliable protection of stored data against external force, and avoiding breakage in the event of accidental fall owing to excellent impact resistance. Also, the head portion can be prevented from being mistakenly inserted into an electronic lock by making the head portion have a size not permitting insertion into the electronic lock.

According to the second aspect of the present invention, there is provided a data medium comprising a body, and an IC module housing a semiconductor integrated circuit which constitutes at least a microprocessor and a memory, wherein a pit is formed in the key body, at least the inner surface and surrounding portion of the pit are coated with a ceramic layer, contacts for electrical connection are formed on the surface of the IC module, and the IC module is fitted into the pit so that the contacts are exposed to the outside of the body. Preferably, the body is made of metal. Preferably, the entire surface of the body is coated with the ceramic layer. Preferably, the ceramic layer coating the body is based on zirconium oxide and supplemented with yttrium oxide as a stabilizer. In the event that the data medium is used as an electronic key, it is preferable that the body has a head portion to handle and an insert portion to insert into an electronic lock, and the pit is formed in the insert portion. Preferably, the head portion is of a size not permitting insertion into the electronic lock.

In the data medium according with the second aspect of the present invention, the semiconductor integrated circuit, which constitutes at least a microprocessor and a memory, and the contacts are integrated into the IC module, so that it is unnecessary to separately provide leads on the outside of the IC module to contact the semiconductor integrated circuit and the contacts. In other words, this data medium is easy to produce, since it functions merely by fitting the IC module into the pit of the body. When the body is made of a tough and rigid metal, deformation due to external stress is minor even if it is thin. It is therefore possible to suppress deformation of the IC module, which is fitted into the pit of the body, due to external stress. Since at least the inner surface and surrounding portion of the pit are coated with a ceramic layer, malfunction and memory destruction in the IC circuit due to static electricity are prevented even when the body is made of an electroconductive metal. Also, since the body is made of metal, reuse of the data medium is possible even in the case of cracking of the ceramic layer by impact. By coating the entire surface of the body with the ceramic layer, it is possible to more surely prevent malfunction and memory destruction in the IC circuit and malfunction of the reader writer. Also, a combination of the excellent wear resistance and chemical stability of the ceramic material offers marked improvement in the durability of the data medium. By using zirconium oxide as the principal component of the ceramic layer and adding yttrium oxide as a stabilizer, strength and fracture toughness are enhanced. Thereby it is possible to provide an easy-to-produce data medium having a large memory data storage capacity, offering high security for stored data and reliable protection of stored data against external force, and having excellent impact resistance and portability. Also, when the body is made of metal, high strength makes it possible to reliably prevent the IC module from destruction by external force, and increased formability makes it possible to use various processing methods to form the data medium in any shape. Also, when the data medium is used as an electronic key, the head portion can be prevented from being mistakenly inserted into an electronic lock by making the head portion have a size not permitting insertion into the electronic lock.

### BRIEF DESCRIPTION OF THE DRAWINGS

Figure 1 is a perspective view of the electronic key relating to an embodiment according with the first aspect of the present invention.

Figure 2 is an exploded perspective view of the electronic key shown in figure 1.

Figure 3 is a cross-sectional view of the electronic key shown in figure 1.

Figure 4 is a block diagram showing the configuration of the microcomputer for the electronic key relating to the embodiment according with the first aspect of the present invention and the configuration of an electronic lock.

Figure 5 is a sectional front view of a door having the electronic lock shown in figure 4.

Figure 6 is a perspective view of an electronic key relating to the first embodiment according with the second aspect of the present invention.

Figure 7 is an exploded perspective view of the electronic key shown in figure 6.

Figure 8 is a cross-sectional view of the electronic key shown in figure 6.

Figures 9 (1), (2) and (3) are cross-sectional views of the key bodies relating to embodiments according with the second aspect of the present invention.

Figure 10 is a block diagram showing the configuration of the microprocessor of the electronic key relating to the embodiment according with the second aspect of the present invention and the configuration of the electronic lock.

Figures 11 (1), (2) and (3) are diagrams showing the production process for the electronic key relating to the second embodiment according with the second aspect of the present invention.

Figure 12 is a perspective view of the electronic key relating to the third embodiment according with the second aspect of the present invention.

Figure 13 is a plan view of a conventional IC card.

Figure 14 is a plan view of a conventional electronic key.

Figure 15 is a plan view of another conventional electronic key.

### DETAILED DESCRIPTION OF THE PREFERRED EMBODIMENTS

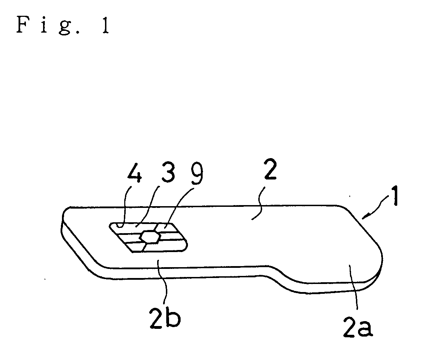

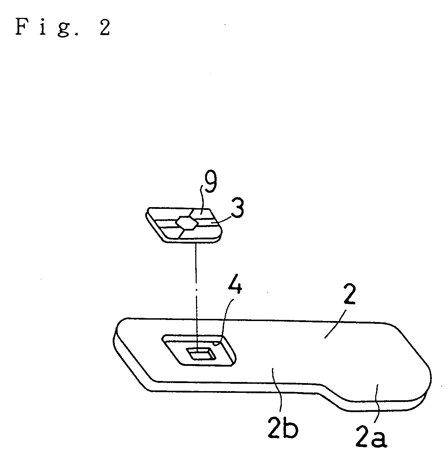

An embodiments according with the first aspect of the present invention is hereinafter described with reference to Figures 1 through 5.

The electronic key 1 illustrated in Figures 1 through 3 is used for operating an electronic lock for a hotel room, a safety box of the hotel facilities or the like. This electronic key 1 comprises a key body 2 and an IC module 3. The key body 2 which is integrally molded from ceramic material has a head portion 2a to handle and an insert portion 2b to insert in an electronic lock. The head portion 2a is of a size not permitting insertion into the keyhole of the electronic lock.

In this embodiment, zirconia is used as the ceramic material for the key body 2. This zirconia is based on zirconium oxide and supplemented with yttrium oxide as a stabilizer. The crystalline phase of the zirconia is mainly of tetragonal, with the remaining comprising cubic and monoclinic.

In this embodiment, the key body 2 is molded as follows. First, the starting material zirconia powder was dispersed in a dispersant (water) to yield slip. Next, the slip was poured into a gypsum mold having a key-shaped cavity to carry out molding. After completion of the molding, the molded product was released from the gypsum mold and dried, and then it was subjected to preliminary sintering. Next, the molded product was subjected to main sintering at 1500°C for 1 hour, whereby the key body 2 was obtained. The reason why zirconia was used as the ceramic material for the key body 2 was that it exceeds other ceramic materials in bending strength and fracture toughness. For example, alumina is about 38 kg/mm² in bending strength and about 3 MN/m^{3/2} in fracture toughness, while the zirconia used in this embodiment is about 110 kg/mm² in bending strength and about 10 MN/m^{3/2} in fracture toughness.

A pit 4 is formed in the insert portion 2b of the key body 2. The pit 4 is formed by machining the molded product using an NC machine tool between the above-mentioned preliminary sintering and the main sintering. In this case, the dimensional precision of the pit 4 is high because ceramic materials undergo little dimensional shrinkage by sintering.

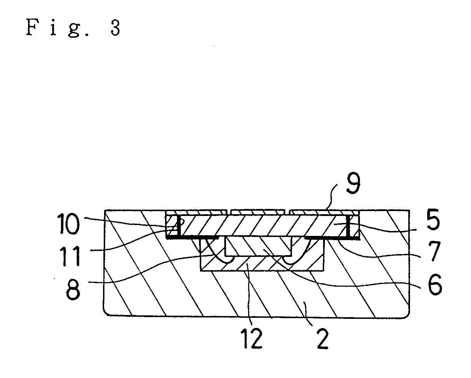

The IC module 3 is fitted into the pit 4 formed in the insert portion 2b and is immobilized with an adhesive. As illustrated in Figure 3, the IC module 3 comprises a printed board 5, a semiconductor integrated circuit 6 formed on the illustrated lower side of the board 5, a printed circuit 7 formed around the semiconductor integrated circuit 6, bonding wires 8 connecting the semiconductor integrated circuit 6 and the printed circuit 7, a sealing material 12 covering the semiconductor integrated circuit 6 and the bonding wires 8, contacts 9 formed on the illustrated upper side of the board 5, and leads 11 connecting the contacts 9 and the printed circuit 7 via through-holes 10 formed in the board 5. The IC module 3 is immobilized so that the contacts 9 are exposed to the outside of the insert portion 2b and the semiconductor integrated circuit 6 is located inside the pit 4. The contacts 9 are electrically connected to contacts of peripherals (e.g., computer for controlling an electronic lock, data reader writer), and are constituted of a power source contact, a clock contact, a GND (Ground) contact, an input/output contact and a reset contact and the like.

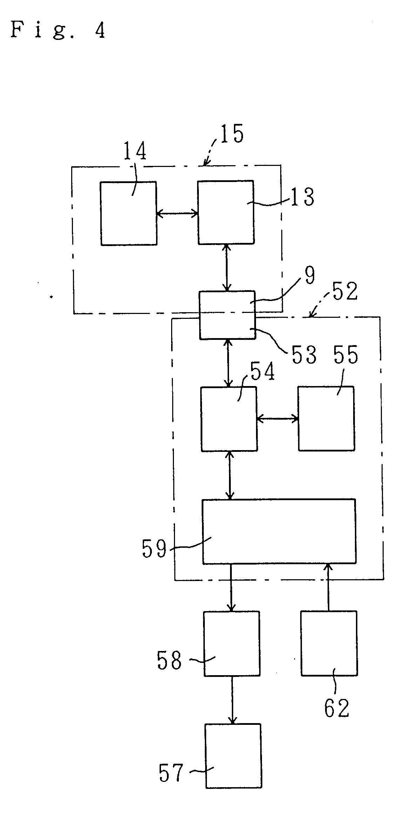

As illustrated in Figure 4, the semiconductor integrated circuit 6 constitutes a single-chip microcomputer 15 having a microprocessor 13 serving as a central processing unit (CPU) and a semiconductor memory 14. The semiconductor memory 14, EEPROM (Electrically Erasable Programmable Read Only Memory) in this embodiment, stores identifying data specific to the key 1.

The thickness of the key body 2 described above is not less than 2.0 mm and not more than 5.0 mm, preferably not less than 2.5 mm and not more than 5.0 mm. This setting is for preventing the key 1 from breakage by impact and for retaining good portability. The thickness of the key body 2 decreases as the depth of the pit 4 increases. However, since the pit 4 is used only for fitting the IC module 3 therein, the depth and area of the pit 4 are slight. Thus, the pit 4 hardly affects the impact resistance of the key body 2. For this reason, the term "thickness" of key body 2 used in the present invention is defined as the thickness of the portion where the pit 4 is not present.

The following Table 1 shows the results of a fall test for electronic keys, wherein alumina and mullite as well as zirconia were used as key body materials. For each material and each thickness, 15 (= N) keys were tested. Each key was thrice fallen from a position 1.5 m above to a concrete floor. In Table 1, "cracking" means that the key body is too much damaged to use, "edge loss" means that the key body is partially broken though it remains usable, and "breakage" means the both of "cracking" and "edge loss".

**Table 1**

| Key body material | Thickness (mm) | Number of cracking | Number of edge loss | Number of breakage (n) | Breakage rate (n/N ×100) |
|---|---|---|---|---|---|
| ZIRCONIA | 0. 5 | 10 | 3 | 13 | 87 |
| | 1. 0 | 5 | 5 | 10 | 67 |
| | 1. 5 | 1 | 1 | 2 | 13 |
| | 2. 0 | 0 | 0 | 0 | 0 |
| | 2. 5 | 0 | 0 | 0 | 0 |
| | 3. 0 | 0 | 0 | 0 | 0 |
| ALUMINA | 1. 5 | 2 | 4 | 6 | 40 |
| | 2. 0 | 0 | 2 | 2 | 13 |
| | 3. 0 | 0 | 0 | 0 | 0 |
| MULLITE | 1. 5 | 3 | 5 | 8 | 54 |
| | 2. 0 | 0 | 3 | 3 | 20 |
| | 3. 0 | 0 | 0 | 0 | 0 |

From Table 1, it is confirmed that breakage rate becomes low by setting the thickness of the zirconia key body at not less than 2.0 mm, and that breakage is surely prevented by setting the thickness exceeds 2.5 mm. Similarly, when the key body is made of alumina or mullite, breakage rates decrease as the thickness increases above not less than 2.0 mm, and further increasing the thickness results in even lower breakage rates.

Accordingly, since the key body 2 of the above electronic key 1 is made of a zirconia ceramic material, it is strong and tough. For this reason, the breakage of the IC module 3 by external force can be reliably prevented. Because the zirconia ceramic material is excellent in insulating property, data destruction in the semiconductor memory by static electricity can be prevented, and the influence of external electrical noise during action of the IC module 3 can be minimized. The zirconia ceramic material is not liable to flaws because of excellent wear resistance. By polishing the zirconia ceramic key body 2 after the main sintering, the surface of the key body 2 can be provided with gloss, and foreign body adhesion can be prevented. Also, since the above key body 2 is molded by casting, it is easy to obtain various shapes. Also, since the zirconia ceramic material undergoes little thermal shrinkage by sintering, high dimensional precision is obtained. Provided that the thickness of the key body 2 is not less than 2.0 mm, breakage due to accidental fall can be prevented, and provided that the thickness is not more than 5.0 mm, excellent portability is achieved.

By inserting the insert portion 2b of the key body 2 into a keyhole of an electronic lock, the contacts 9 of the IC module 3 is connected to contacts of a computer controlling the electronic lock, whereby it is judged whether the identifying data stored in the semiconductor memory of the IC module 3 correspond to the identifying data of the electronic lock or not. If the identifying data correspond to that of the electronic lock, the electronic lock is opened. In this case, the identifying data stored in the memory of the key 1 are read out not directly but via CPU.

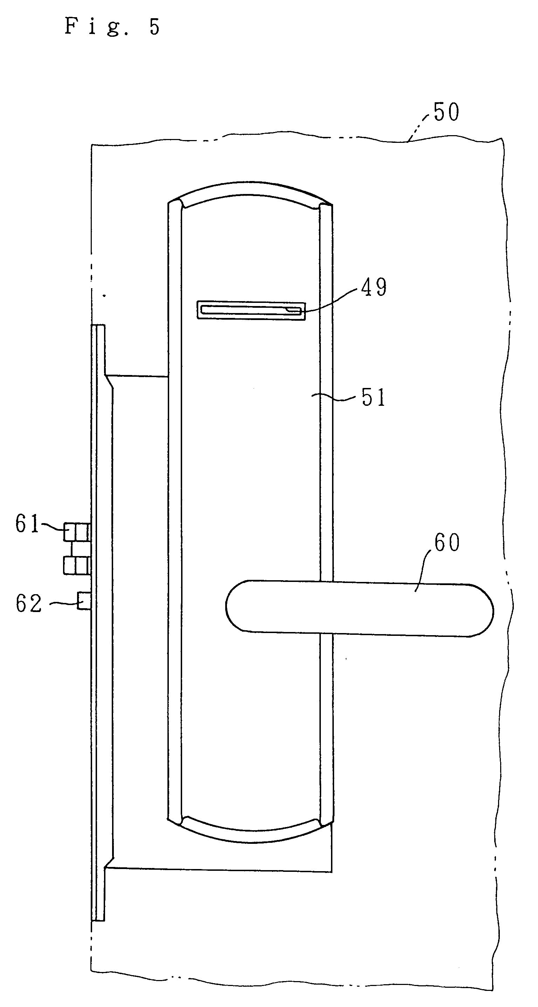

For example, in case of opening an electronic lock 51 attached to a hotel room door 50 as illustrated in Figure 5, the insert portion 2b of the key body 2 is first inserted into a keyhole 49 of the electronic lock 51 to connect the contacts 9 of the IC module 3 to contacts 53 of a computer 52 controlling the electronic lock 51 as shown in figure 4. Then, the CPU 54 of the computer 52 passes a signal, which corresponds to both of the hotel code data and the room code data stored in a memory 55, to the CPU 13 of the key 1. The CPU 13 of the key 1 judges whether the identifying data stored in the memory 14 of the key 1 accord with the data passed from the CPU 54 of the electronic lock 51 or not, and passes the judgment result to the CPU 54 of the electronic lock 51. The CPU 54 of the electronic lock 51 makes control according to this judgement result. Specifically, if the two data accord with each other, the CPU 54 passes a lock opening signal via an interface 59 to a controlling circuit 58 for an actuator 57 of a clutch (not illustrated), which functions to interlock a latch 61 of the electronic lock 51 with an operating lever 60 and to release the latch 61 from the lever 60. The latch 61 and the operating lever 60 are thereby connected via the clutch, so that the latch 61 can enter inside the electronic lock 51 by turning the operating lever 60, i.e., the electronic lock 51 is opened. If the two data disaccord with each other, the actuator 57 remains disabled, and the latch 61 does not enter inside the electronic lock 51 even when the operating lever 60 is turned, i.e., the electronic lock 51 remains locked. With these features, the electronic key 1 of this embodiment offers remarkably higher security, in comparison with conventional electronic keys, which are merely provided with a memory.

The electronic lock 51 is provided with a sensor 62 below the latch 61, the sensor 62 enters into the electronic lock 51 upon closing the door 50. Upon passing a closing signal of the door 50 from this sensor 62 to the CPU 54 of the electronic lock 51, the CPU 54 passes a lock setting signal to the controlling circuit 58 except in the process of lock opening by the key 1, whereby the connection of the latch 61 and the operating lever 60 via the clutch is disengaged, and the latch 61 is locked in the state of projecting from the electronic lock 51, i.e., the electronic lock 51 is locked.

To summarize, since the semiconductor integrated circuit 6, which constitutes the microprocessor 13 and the memory 14, and the contacts 9 are formed on the printed board 5 of the IC module 3 fitted to the above electronic key 1, it is unnecessary to separately provide leads on the outside of the IC module 3 to connect the semiconductor integrated circuit 6 and the contacts 9. Thus, the electronic key 1 functions as a key merely by fitting the IC module 3 into the pit 4 of the key body 2. Also, since the IC module 3 constitutes the microcomputer 15 equipping with the microprocessor 13 and memory 14, reading and writing of the stored data in the memory 14 can be controlled via the microcomputer 15. It is therefore possible to improve security by preventing the stored data from direct reading out. It is also possible to control the history of key operation, such as the frequency of use and purpose of use, on off-line basis.

In some cases, it is necessary to color the key for providing an appearance of high quality, identification and other purposes. In the above ceramic materials, white, black, gray, light yellowish white and other colors can be imparted. Also, by adding an additive containing iron, cobalt, nickel, copper, zinc, manganese, chromium, a rare earth element or another colorant as desired, as long as it does not interfere with the key function, various color tones including red, yellow and blue may be imparted. Color tone can be adjusted by thinly coating the key body 2 except for the fitting portion of the IC module 3 with a glassy material and coloring the glassy material. In this case, from viewpoint of strength, it is preferable to keep the thermal expansion coefficient difference between glass and the key body 2 within about ± 20%. Also, the surface of key body 2 may be partially colored by coating with a thin film of a material of gold color such as titanium nitride with CVD (Chemical Vapor Deposition), PVD (Physical Vapor Deposition) and other techniques.

The surface of the key body 2 may be provided with patterns such as a room number, a name of company and a mark. Such patterns can be made by embossing patterns corresponding to the patterns inside the mold used in the production process, by engraving with a small drill after preliminary sintering, by laser processing after main sintering and by ultrasonic processing after main sintering. It is also possible to glaze the pattern on the key body.

The first aspect of the present invention is not limited to the above embodiment. For example, the key body may be made of a non-zirconia ceramic material. Examples of preferable oxide-series ceramic materials of high strength and high toughness include alumina and mullite. As for non-oxide-series ceramic materials, silicon nitride, aluminum nitride and others are usable. Ceramic materials such as alumina-containing reinforced porcelain and reinforced glass are also usable. Two or more ceramic materials may be used in combination for a composite material, such as alumina-zirconia and zirconia-mullite. Fiber-reinforced ceramics based on a matrix material as described above and containing fiber or whisker of alumina or silicon nitride are also useful. In any case, any ceramic material is effective for the key body of the first aspect of the present invention, as long as it meets the key requirements of mechanical strength and electrical insulation. Also, the key body shape is not limited to the above embodiment; any shape is acceptable, as long as it has a head portion and an insert portion to insert into an electronic lock, and the insert portion has a pit formed therein into which the IC module is fitted. The forming method for the key body is not limited to casting; other forming methods, such as press forming, are applicable according to the shape and cost.

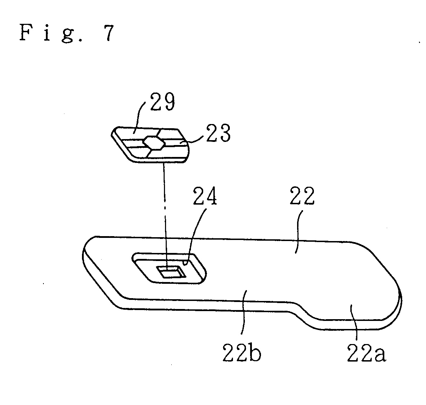

An embodiment according with the second aspect of the present invention is hereinafter described with reference to Figures 5 through 10.

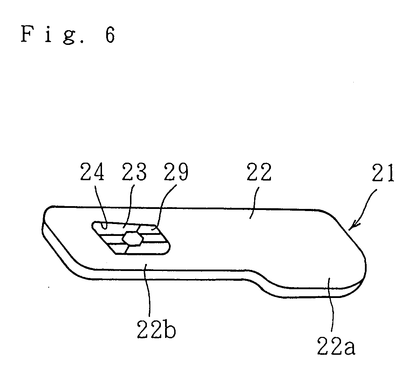

The electronic key 21 illustrated in Figures 6 through 9 is used for operating an electronic lock for a hotel room, a safety box of the hotel facilities or the like. This electronic key 21 comprises a key body 22 and an IC module 23. The key body 22 is integrally formed from a metal material such as brass, stainless steel, nickel silver, casted iron, hard aluminum, mild steel suitable for enameling or phosphor bronze, and has a head portion 22a to handle and an insert portion 22b to insert into an electronic lock. The head portion 22a is of a size not permitting insertion into the keyhole of the electronic lock. A pit 24 is formed in the insert portion 22b. This key body 22 can be formed by casting, forging, press forming, machining and other techniques.

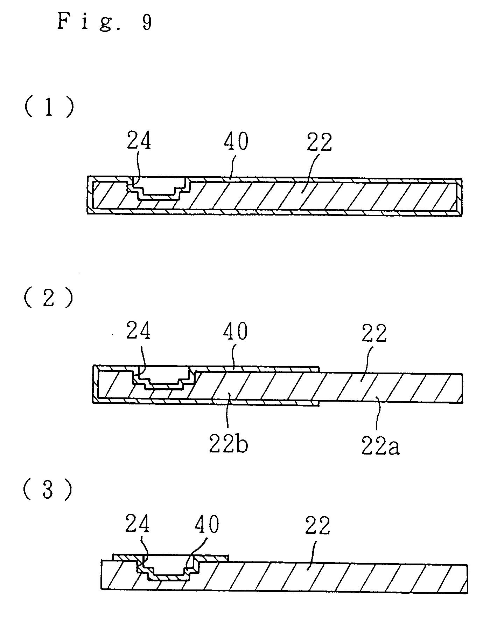

The key body 22 is coated with a ceramic layer 40. The ceramic layer 40 may coat the entire surface of the key body 22 as illustrated in Figure 9 (1), or may coat the surface of insert portion 22b only as illustrated in Figure 9 (2), or may coat the inner surface and surrounding portion of the pit 24 only as illustrated in Figure 9 (3). In short, it is sufficient to coat at least the inner surface and surrounding portion of the pit 24.

In this embodiment, zirconia is used as the ceramic material for coating the key body 22. This zirconia is based on zirconium oxide and supplemented with yttrium oxide as a stabilizer. The crystalline phase of the zirconia is mainly of tetragonal, with the remaining comprising cubic and monoclinic.

As a pretreatment of the key body 22 prior to coating the ceramic layer 40, the key body 22 may be subjected to a surface treatment such as oil hardening, acid pickling, neutralization, drying or sand blast as occasion demands. PVD, CVD, plasma injection or another technique may be employed to coating the key body 22 with the zirconia used in this embodiment. Since the thermal expansion coefficient of zirconia, approximately 8 × 10⁻⁶ to 10 × 10⁻⁶, is close to that of metal materials, it is relatively easy to bind zirconia to metal base. For this reason, neither cracking nor peeling is caused by thermal stress due to temperature fluctuations in the environment in which the key is used. Also, since zirconia is high in strength, 110 kg/mm², and is high in fracture toughness, 10 MN/m^{3/2}, so that its wear resistance is high.

The key body 22 may also be coated with a non-zirconia ceramic material. For example, oxide-series ceramic materials such as alumina, mullite, alumina-zirconia, mullite-zirconia, silica and titania can be used, which surpass metal materials in antistatic property, wear resistance and chemical stability. Non-oxide-series ceramic materials such as silicon nitride, aluminum nitride, titanium nitride, zirconium nitride, zirconium carbide and titanium carbide are useful, which are used singly or in combination. It is important to keep the thermal expansion coefficient difference between the ceramic material and the metal key body 22 within about ±20% in order to adapt the ceramic material to the key body 22 in the coating process. It is therefore necessary to consider whether the combination of metal and ceramic material is proper or not. Though there is hardly need to set limits the coating thickness of the ceramic layer 40 when the thermal expansion coefficient of the ceramic material is close to the thermal expansion coefficient of the key body 22, in view of practical applicability, coating strength and cost depending on the combination of materials, the preferable coating thickness is about several µm to 0.5 mm.

Enameling as a coating technique of the ceramic materials is also effective. In the event that enameling is employed, it is demanded to use vitreous ceramic material. Specifically, it is necessary to securely coat the key body 22 with a vitreous ceramic layer by glazing, drying and burning after pretreatment of the key body 22. In this case, it is also necessary to match the thermal expansion coefficient of metal key body 22 to that of the vitreous ceramic material as much as possible. For practical application, it is preferable to keep the thermal expansion coefficient difference between the ceramic material and the metal key body 22 within about ±20%. The coating thickness is not subject to limitation as long as it is not more than 0.5 mm. Examples of vitreous ceramic materials include silicate glass, borosilicate glass, aluminosilicate glass, crystallized glass and ceramic particle dispersed glass, which are used optionally. In the coating process of vitreous ceramic material, double glazing and other ordinary enameling techniques are used as occasion demands. When enameling technique is used, coating temperature of the vitreous ceramic material should be such that the metal used as material for the key body 22 does not undergo oxidation or softening. For example, it is preferable that the coating process is executed in the temperature range from 800°C to 900°C in the event that the material of the key body 22 is mild steel. For coating the key body 22 with vitreous ceramic material, plasma injection etc. are also effective as coating methods.

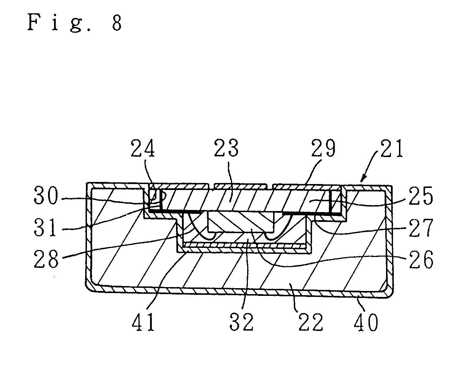

The IC module 23 is fitted into the pit 24 formed in the insert portion 22b and is immobilized with an adhesive. As illustrated in Figure 8, the IC module 23 comprises a printed board 25, a semiconductor integrated circuit 26 formed in the illustrated lower side of the board 25, a printed circuit 27 formed around the semiconductor integrated circuit 26, bonding wires 28 connecting the semiconductor integrated circuit 26 and the printed circuit 27, a sealing material 32 covering the semiconductor integrated circuit 26 and the bonding wires 28, contacts 29 formed on the illustrated upper side of the board 25, and leads 31 connecting the contacts 29 and the printed circuit 27 via through-holes 30 formed in the board 25. The contacts 29 are electrically connected to contacts of peripherals (e.g., computer controlling an electronic lock, data reader writer), and are constituted of a power source contact, a clock contact, a GND contact, an input/output contact and a reset contact and the like.

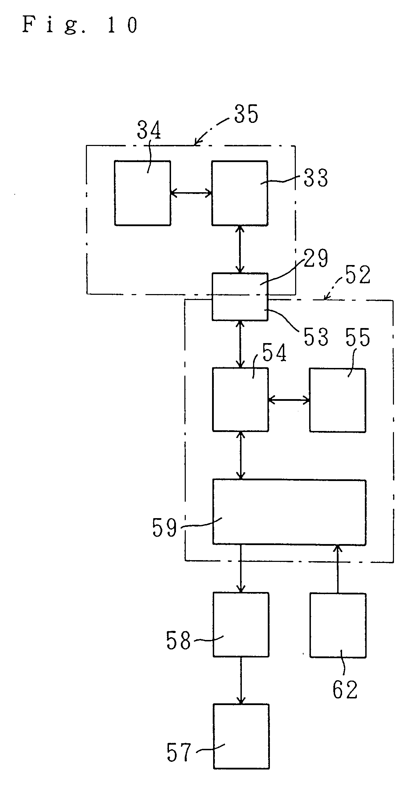

As illustrated in Figure 10, the semiconductor integrated circuit 26 constitutes a single-chip microcomputer 35 having a microprocessor 33 serving as a central processing unit (CPU) and a semiconductor memory 34. The semiconductor memory 34, EEPROM in this embodiment, stores identifying data specific to the key 21.

By inserting the insert portion 22b of the key body 22 into a keyhole of an electronic lock, the contacts 29 of the IC module 23 is connected to contacts of a computer controlling the electronic lock, whereby it is judged whether the identifying data stored in the semiconductor memory of the IC module 23 correspond to the identifying data of the electronic lock or not. If the identifying data correspond to that of the electronic lock, the electronic lock is opened. In this case, the identifying data stored in the memory of the key 21 are read out not directly but via the CPU.

For example, when opening the electronic lock 51 attached to the hotel room door 50 as illustrated in Figure 5, the insert portion 22b of the key body 22 is first inserted into the keyhole 49 of electronic lock 51 to connect the contacts 39 of the IC module 23 to the contacts 53 of the computer 52 controlling the electronic lock 51 as shown in figure 10. Then, the CPU 54 of the computer 52 passes a signal, which corresponds to both of the hotel code data and the room code data stored in the memory 55, to the CPU 33 of the key 21. The CPU 33 of the key 21 judges whether the identifying data stored in the memory 34 of the key 21 accord with the data passed from the CPU 54 of the electronic lock 51 or not, and passes the judgment result to the CPU 54 of the electronic lock 51. The CPU 54 of the electronic lock 51 makes control according to this judgement result. Specifically, if the two data accord with each other, the CPU 54 passes a lock opening signal via the interface 59 to the controlling circuit 58 for the actuator 57 of the clutch, which functions to interlock the latch 61 of the electronic lock 51 with the operating lever 60 and to release the latch 61 from the lever 60. The latch 61 and the operating lever 60 are thereby connected via the clutch, so that the latch 61 can enter inside the electronic lock 51 by turning the operating lever 60, i.e., the electronic lock 51 is opened. If the two data disaccord with each other, the actuator 57 remains disabled, so that the latch 61 does not enter inside the electronic lock 51 even when the operating lever 60 is turned, i.e., the electronic lock 51 remains locked. With these features, the electronic key 21 of this embodiment offers remarkably higher security, in comparison with conventional electronic keys, which are merely provided with a memory.

To summarize, since the semiconductor integrated circuit 26, which constitutes the microprocessor 33 and the memory 34, and the contacts 29 are formed on the printed board 25 of the IC module 23 fitted to the above electronic key 21, it is unnecessary to separately provide leads on the outside of the IC module 23 to contact the semiconductor integrated circuit 26 and the contacts 29. Thus, the electronic key 21 functions as a key merely by fitting the IC module 23 into the pit 24 of the key body 22. Also, since the IC module 23 constitutes the microcomputer 35 equipping with the microprocessor 33 and memory 34, reading and writing of the stored data in the memory 34 can be controlled via the microcomputer 35. It is therefore possible to improve security by preventing the stored data from direct reading out. It is also possible to control the history of key operation, such as the frequency of use and purpose of use, on off-line basis.

Because the key body 22 is made of metal, it remains strong and rigid even when it is made thin. It is therefore possible to surely prevent the breakage of the IC module 23 by external force. Also, even in the event of cracking of the ceramic layer 40 due to impact by accidental fall, the degree of breakage is never such that the key is unusable. Moreover, since the key body 22 is made of metal, various forming methods can be used to obtain any shapes, and a feeling of heaviness can be provided for the key 21. Also, since at least the inner surface and surrounding portion of the pit 24 are coated with an excellently insulating ceramic layer 40, memory destruction in the semiconductor memory by static electricity is prevented. Malfunction can also be prevented, since the influence of electrical noise from outside during action of the IC module 23 is insignificant.

It is preferable to coat the entire surface of the key body 22 including the inner surface of the pit 24 with the ceramic layer 40 to improve antistatic property, wear resistance, durability and other properties. When only the inner surface and surrounding portion of the pit 24 are coated with the ceramic layer 40, it is preferable to set coating range so that no electric current flows due to transfer of charge on an electrified human body, for instance, from key body 22 to the reader writer for the IC module 23. Although the coating range varies depending on the structure of the key receptacle of the reader writer, it is preferable to coat the range extending by not less than 20 mm from the edge of the pit 24.

Also, since ceramic materials are excellent in wear resistance, surface hardness can be increased to prevent flaws by coating the entire surface of the key body 22 with the ceramic layer 40. Also, by polishing the key body 22 after ceramic coating, gloss can be provided for the surface of the key 21 and adhesion of foreign substances can be prevented.

The key 21 may be colored for the purpose of providing an appearance of high quality, identification and so on. For example, when the key is coated with an oxide-series or non-oxide-series ceramic material by PVD etc., a particular color can easily be imparted by thermally decomposing or chemically reacting a compound containing iron, cobalt, nickel, copper, zinc, manganese, chromium or a rare earth element simultaneously with the coating operation. Solution or suspension containing a coloring component as described above may be laid on the ceramic layer 40 coating the key 21, followed by baking at low temperature. These methods makes it possible to impart white, blue, red, black and other colors. It is also possible to change the color of the ceramic material itself by, for example, reduction, oxidation or neutralization, under a heating atmosphere in the absence of colorants. Particularly, zirconia can be blackened by reducing treatment. Also, some non-oxide-series ceramic materials, titanium nitride, zirconium nitride, etc. can be colored into gold by PVD and CVD. In case of coating a vitreous ceramic material, the desired color can easily be imparted merely by combining the starting coating material with a colorant as described above before coating so that the desired tone will be obtained.

The surface of the key body 22 may be provided with a patterns such as a room number, a name of company and a mark. Such patterns can be made by cutting, knocking-on and laser processing in the production process of the key body 22. It is also possible to transfer a pattern made in the mold to the key body 22 at the time of molding. When an embossed pattern is made in the key body 22 before ceramic coating, it is desirable that the depth of the embossed pattern is slightly greater than the thickness of the ceramic coating. In case of coating vitreous ceramic material, the use of a transparent vitreous material allows the pattern to be seen through the glass layer even when the depth of the embossed pattern is slight. After embossing the key body 22, a heat treatment at a temperature exceeding the softening point of the glass may be carried out to eliminate flaws by smoothing the surface of the key body 22, followed by vitreous ceramic coating, whereby the cracking resistance of the vitreous ceramic material can be improved. It is of course possible to provide the key body 22 with a pattern after ceramic coating.

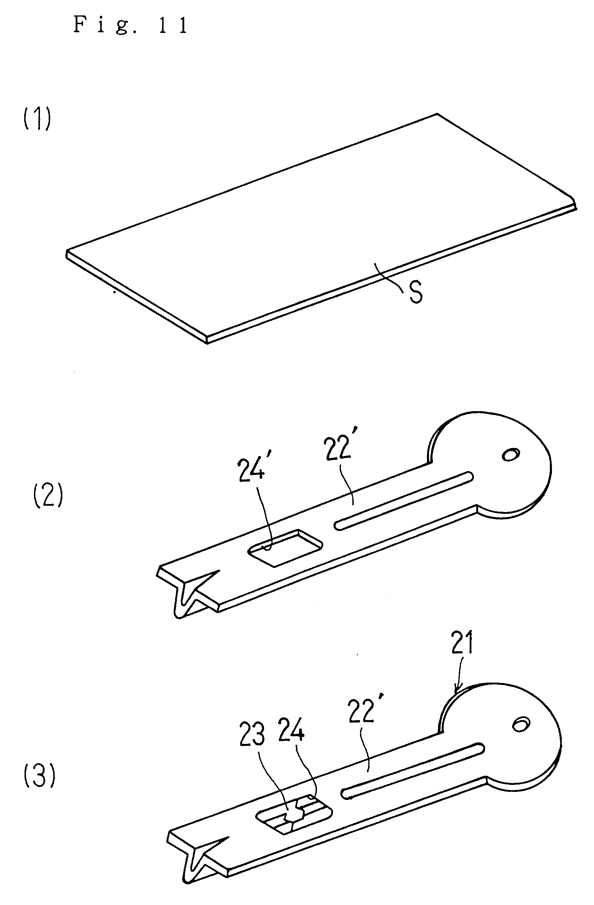

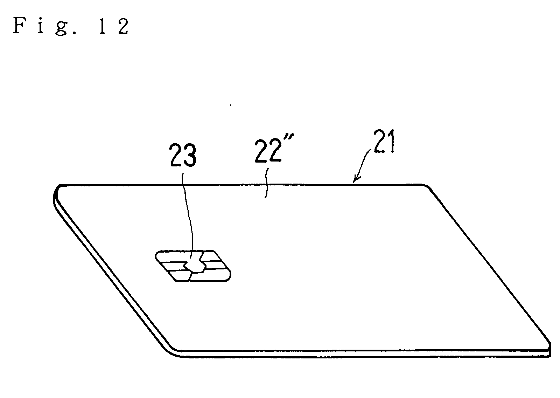

The second aspect of the present invention is not limited to the above embodiment. For example, the shape of the key body 22 is not limited to the above embodiment; by pressing a plate-like metal material S as illustrated in Figure 11 (1), a key body 22' having a pit 24' as illustrated in Figure 11 (2) may be formed, and subsequently at least the inner surface and surrounding portion of the pit 24' may be coated with a ceramic layer, and then the IC module 23 may be fitted into the pit 24' so that the contacts 29 are exposed to the outside of the body 22' as illustrated in Figure (3). Also, as illustrated in Figure 12, the key body 22'' may be made in the form of a card. The second aspect of the present invention has been applied to an electronic key in the above embodiment, but it may be applied widely as a data medium, such as a ID card and a cash dispensing card.

## Claims

1. A data medium for electronic key comprising a ceramic key body having a head portion to handle and an insert portion to insert into an electronic lock, and an IC module housing a semiconductor integrated circuit which constitutes at least a microprocessor and a memory, wherein a pit is formed in the insert portion, contacts for electrical connection are formed on the surface of the IC module, and the IC module is fitted into the pit so that the contacts are exposed to the outside of the insert portion.

2. The data medium according to claim 1 wherein the thickness of the key body is not less than 2.0 mm and not more than 5.0 mm.

3. The data medium according to claim 1 wherein the head portion is of a size not permitting insertion into the electronic lock.

4. The data medium according to claim 1 wherein the ceramic material constituting the key body is based on zirconium oxide and supplemented with yttrium oxide as a stabilizer.

5. A data medium comprising a body, and an IC module housing a semiconductor integrated circuit which constitutes at least a microprocessor and a memory, wherein a pit is formed in the body, at least the inner surface and surrounding portion of the pit are coated with a ceramic layer, contacts for electrical connection are formed on the surface of the IC module, and the IC module is fitted into the pit so that the contacts are exposed to the outside of the body.

6. The data medium according to claim 5 wherein the body is made of metal.

7. The data medium according to claim 5 wherein the entire surface of the body is coated with the ceramic layer.

8. The data medium according to claim 5 wherein the ceramic layer coating the body is based on zirconium oxide and supplemented with yttrium oxide as a stabilizer.

9. The data medium for an electronic key use according to claim 5 wherein the body has a head portion to handle and an insert portion to insert into an electronic lock, and the pit is formed in the insert portion.

10. The data medium for electronic key use according to claim 9 wherein the head portion is of a size not permitting insertion into the electronic lock.
